# EUROPÄISCHE PATENTANMELDUNG

(11) **EP 2 859 975 A1**
(43) Veröffentlichungstag der Anmeldung: **15.04.2015**
(21) Anmeldenummer: 14188014.6
(22) Anmeldetag: 07.10.2014
(51) Int. Cl.: B23B 51/02, B23C 5/10, B23D 77/02

(54) **Rotationsschneidwerkzeug mit schraubenförmig verlaufenden Schneidkanten sowie Verfahren zur Herstellung eines solchen**

(30) Priorität: 07.10.2013 DE 102013111090; 03.04.2014 DE 102014104781
(71) Anmelder: Jakob Lach GmbH & Co. KG, 63452 Hanau (DE)
(72) Erfinder: Maurer, Eugen, 61239 Ober-Mörlen (DE)
(74) Vertreter: Stoffregen, Hans-Herbert

(57) **Zusammenfassung**

Die Erfindung bezieht sich auf ein Rotationsschneidwerkzeug (10), insbesondere ein Fräswerkzeug, Bohrwerkzeug oder eine Reibahle, mit einem metallischen Werkzeuggrundkörper (12) mit zumindest einer vorzugsweise schraubenförmigen Spannut (16, 18), vorzugsweise einem Paar von Spannuten, wobei der zumindest einen Spannut ein Schneidelement (24, 26) aus einem ultraharten Schneidstoff wie polykristalliner Diamant (PKD) oder polykristallines kubisches Bornitrid (PCBN) zur Bildung einer schraubenförmig verlaufenden Schneidkante (28) zugeordnet und mit dem Werkzeuggrundkörper (12; 42; 70; 94) verbunden wie verlötet ist. Um die Standfestigkeit zu erhöhen und die Herstellung zu vereinfachen ist vorgesehen, dass das Schneidelement (24, 26) als ein einteiliger Diamantkörper (24, 26) oder aus mehreren Diamantsegmenten jeweils in Form eines Abschnitts eines Festkörpers ausgebildet ist, welcher oder welche in einer entlang der Spannut (16, 18) ausgebildeten Aufnahme (20, 22) aufgenommen ist bzw. sind, wobei die schraubenförmig gekrümmte Schneidkante in dem Diamantkörper oder den Diamantsegmenten materialabtragend ausgebildet ist.

## Beschreibung

Die Erfindung bezieht sich auf ein Rotationsschneidwerkzeug, insbesondere ein Fräswerkzeug, Bohrwerkzeug oder eine Reibahle, mit einem metallischen Werkzeuggrundkörper mit zumindest einer vorzugsweise schraubenförmigen Spannut, vorzugsweise einem Paar von Spannuten, wobei der zumindest einen Spannut ein Schneidelement bzw. Schneideinsatz aus einem ultraharten Schneidstoff, wie polykristalliner Diamant (PKD; engl. PCD) oder polykristallines kubisches Bornitrid (PKBN; engl. PCBN), zur Bildung einer schraubenförmig verlaufenden Schneidkante zugeordnet und mit dem Werkzeuggrundkörper verbunden wie verlötet ist sowie auf ein Verfahren zur Herstellung eines Rotationsschneidwerkzeugs.

Ein Rotationsschneidwerkzeug sowie Verfahren zur Herstellung eines solchen ist in der DE 689 11 468 T2 beschrieben. Das bekannte Rotationsschneidwerkzeug umfasst einen schraubenförmig mit Spannuten versehenen metallischen Werkzeugbasiskörper und einen polykristallinen Diamantfilm, der mindestens einen Teil einer Spanfläche des mit Spannuten versehenen Werkzeugbasismetallkörpers bedeckt. Der polykristalline Diamantfilm weist eine Dicke im Bereich von 50 bis 300 µm auf. Nach dieser Technik wird der polykristalline Diamantfilm durch Aufdampfen auf einen Bolzen aus Molybdän oder Ähnlichem hergestellt. Das Molybdän-Substrat wird in heißes Königswasser eingebracht und gelöst, um nur das schraubenförmige Band aus Diamant stehenzulassen. Dieser Diamantfilm wird dann auf die Spanfläche der Spannut des Schneidwerkzeugs mit einem Hartlötmittel hartgelötet. Anschließend wird die Flankenoberfläche geschliffen, um eine scharfe Schneidkante zu bilden.

Das Verfahren zur Herstellung des schraubenförmigen Diamantfilms ist recht aufwendig. Auch ist die Standzeit des Rotationsschneidwerkzeugs reduziert, da der Diamantfilm sehr dünn ist.

Die DE 691 04 363 T2 bezieht sich auf ein Rotationsschneidwerkzeug mit sich schraubenförmig entlang seiner Länge erstreckenden Schneidkanten aus hartem Material, umfassend ein Rotationsschneidwerkzeug-Rohteil mit mindestens einem Paar schraubenförmiger Nuten in den Seitenwänden des Rohteils und einem harten Material innerhalb der Nuten. Das harte Material ist ausgewählt aus einer Gruppe, die aus polykristallinem Diamant und polykristallinem kubischen Bornitrid besteht. Das harte Material weist eine Schneidkante auf, welche entlang einer Vorderkante ausgebildet ist, wobei das polykristalline harte Material in situ in den Nuten geformt wird. Das Herstellungsverfahren ist teuer und die Längserstreckung der schraubenförmigen Schneidkanten ist auf 10 mm bis 12 mm begrenzt.

Davon ausgehend liegt der vorliegenden Erfindung die Aufgabe zu Grunde, ein Rotationsschneidwerkzeug der eingangs genannten Art sowie ein Verfahren zur Herstellung eines solchen derart weiterzubilden, dass die Standfestigkeit erhöht und die Herstellung vereinfacht wird.

Die Aufgabe wird erfindungsgemäß u. a. dadurch gelöst, dass das Schneidelement als ein einteiliger Diamantkörper in Form eines Abschnitts eines Festkörpers ausgebildet ist oder einen solchen umfasst oder dass das Schneidelement aus mehreren Diamantsegmenten jeweils eines Abschnitts eines Festkörpers ausgebildet ist oder solche umfasst, dass das Schneidelement in einer entlang der Spannut ausgebildeten Aufnahme aufgenommen ist, wobei die schraubenförmig gekrümmte Schneidkante in dem Diamantkörper oder den Diamantsegmenten materialabtragend ausgebildet ist.

Der Schneideinsatz bzw. das Schneidelement ist vorzugsweise als zumindest ein Diamantsegment oder Diamantkörper ausgebildet, welches mit zumindest einer geraden Fläche gegen einen entlang der Spannut ausgebildeten Anschlag anliegt, wobei in einer der geraden Fläche gegenüberliegenden und/oder angrenzenden Fläche die schraubenförmig gekrümmte Schneidkante materialabtragend eingebracht ist.

Vorzugsweise ist das zumindest eine Diamantsegment oder der Diamantkörper als Abschnitt aus einem Festkörper in Form eines platten- oder scheibenförmigen Solid-PKD-Rohling oder Solid-PKBN-Rohling ausgebildet, wobei die Rohlinge eine Schichtdicke D im Bereich von 0,3 mm ≤ D ≤ 5 mm, vorzugsweise 1 mm ≤ D ≤ 4 mm, besonders bevorzugt D = 2 mm aufweist.

Der das Schneidelement bildende Diamantkörper kann als Solid-PKD oder Solid-PKBN auch auf einem Grundkörper wie Hartmetallträger oder zwischen zwei Grundkörpern wie Hartmetallträgern als Sandwich-PKD-Rohling oder Sandwich-PKBN-Rohling angeordnet sein, wobei die Schneidelemente aus dem Rohling ausgeschnitten werden.

Der zumindest eine Diamantkörper kann auch als CVD-Dünnschicht, CVD-Dickschicht oder Mono-Diamant auf den Werkzeuggrundkörper ausgebildet sein.

Eine weitere bevorzugte Ausführungsform zeichnet sich dadurch aus, dass der Diamantkörper oder das Diamantsegment als ein vorzugsweise stabförmiges Kreisringsegment ausgebildet ist. Das Kreisringsegment wird aus dem platten- oder scheibenförmigen Solid-PKD-, Solid-PCBN-, Sandwich-PKD- oder Sandwich-PCBN-Rohling ausgeschnitten und weist vorzugsweise eine Höhe H im Bereich von 0,1 mm ≤ H ≤ 10 mm, vorzugsweise 2 mm ≤ H ≤ 4 mm, eine Länge L1 im Bereich von 1 mm ≤ L1 ≤ 120 mm, vorzugsweise L1 = 30 mm auf.

Vorzugsweise ist der Anschlag Teil einer gerade oder schraubenförmig verlaufenden L- oder U-förmig ausgebildeten Aufnahme, die in den Werkzeuggrundkörper materialabtragend eingebracht wie eingeschliffen ist.

Bei einer Ausführung, bei der die L- oder U-förmige Aufnahme in einem Winkel α bezogen zur Längsachse des Werkzeugs gerade verläuft, kann der Diamantkörper als flächiges Kreisringsegment ausgebildet sein, wobei ein gebogener Innenrand an einem unteren Schenkel oder Abschnitt der L- oder U-förmigen Aufnahme anliegt und ein gebogener Außenrand eine radiale Außenfläche bildet.

Des Weiteren ist vorgesehen, dass der Spiralisierungswinkel α bei dem einteiligen kreisringförmigen Diamantköper in einem Bereich 1° ≤ α ≤ 30° liegt und dass der Spiralisierungswinkel α bei Ausführung mit mehreren einzelnen, in Längsrichtung nacheinander angeordneten Diamantsegmenten in einem Bereich von 5° ≤ α ≤ 50° liegt.

Eine weitere bevorzugte Ausführungsform zeichnet sich dadurch aus, dass der Schneideinsatz bzw. das Schneidelement aus einer Vielzahl von vorzugsweise plattenförmigen Diamantsegmenten gebildet ist, wobei die Vielzahl von Diamantsegmenten entlang schraubenförmig verlaufendem Anschlag bzw. schraubenförmig verlaufender Aufnahme angeordnet und mit dem Werkezugbasiskörper verbunden wie verlötet sind. Bei dieser Ausführungsform wird die schraubenförmige Schneidkante aus einer Vielzahl Schneidkantensegmenten der einzelnen Diamantsegmente gebildet.

Dabei ist vorzugsweise die schraubenförmige Schneidkante aus einer Vielzahl von Schneidkantenabschnitten der einzelnen Diamantsegmente ausgebildet. Vorzugsweise ist sowohl eine Spanfläche als auch eine Freifläche schraubenförmig gekrümmt ausgebildet.

Ferner weist das Schneidelement eine Rundfase auf, wobei die Rundfase eine Breite B aufweist, die über die Längserstreckung des Schneidelementes konstant ist, kleiner oder größer wird.

Die Aufgabe wird des Weiteren durch ein Verfahren zur Herstellung eines Rotationsschneidwerkzeugs mit einem einen ultraharten Schneidstoff wie polykristallinen Diamant (PKD) oder polykristallines kubisches Bornitrid (PKBN; engl. PCBN) aufweisenden Schneidelement gelöst, welches vorzugsweise die folgenden Schritte aufweist:
- Herstellen eines metallischen Werkzeuggrundkörpers mit zumindest einer oder einem Paar vorzugsweise schraubenförmig verlaufender Spannuten mit jeweils einer Aufnahme für einen Schneideinsatz oder vorzugsweise mit zumindest einer Aufnahme für das Schneidelement entlang eines Spiralisierungswinkels α,
- Herstellung eines Schneideinsatzes bzw. Schneidelements,
- Verbinden des Schneideinsatzes bzw. Schneidelements mit dem Werkzeuggrundkörper, vorzugsweise in der zumindest einen Aufnahme des Werkzeuggrundkörpers,
wobei der Schneideinsatz vorzugsweise als zumindest ein in Radial- und/oder Umfangsrichtung Übermaß aufweisendes Diamantsegment ausgebildet und mit dem Werkzeuggrundkörper verbunden wird und wobei durch Materialabtragung des mit dem Werkzeuggrundkörper verbundenen Diamantsegments in Radial- und/oder Umfangsrichtung eine schraubenförmig bzw. helikal bzw. spiralisiert verlaufende Schneidkante ausgebildet wird.

Alternativ können als Schneidelement einteilige Diamantkörper in Form eines Abschnitts eines Festkörpers oder mehrere Diamantsegmente jeweils in Form eines Abschnitts eines Festkörpers verwendet und in der Aufnahme derart befestigt werden, dass das Schneidelement in Radial- und/der Umfangsrichtung ein Übermaß gegenüber einem Sollmaß aufweist und dass durch Materialabtragung in Radial- und/oder Umfangsrichtung des mit dem Werkzeuggrundkörper verbundenen Schneidelementes eine schraubenförmig verlaufende Schneidkante ausgebildet wird.

Besonders bevorzugt ist, dass das Schneidelement als ein einteiliger Diamantkörper oder aus mehreren Diamantsegmenten jeweils in Form eines Abschnitts eines Festkörpers ausgebildet und in der Aufnahme derart befestigt wird, dass das Schneidelement in Radial- und/der Umfangsrichtung ein Übermaß gegenüber einem Sollmaß aufweist und dass durch Materialabtragung in Radial- und/oder Umfangsrichtung des mit dem Werkzeuggrundkörper verbundenen Schneidelementes eine schraubenförmig verlaufende Schneidkante ausgebildet wird.

Vorzugsweise wird der der Schneideinsatz bzw. das Schneidelement als zumindest ein Diamantsegment oder Diamantkörper ausgebildet ist, welches mit zumindest einer geraden Fläche gegen einen entlang der Spannut ausgebildeten Anschlag anliegt, wobei in einer der geraden Fläche gegenüberliegenden oder angrenzenden in Radial- und/oder Umfangsrichtung Übermaß aufweisenden Fläche die schraubenförmig gekrümmte Schneidkante materialabtragend eingebracht wird.

Als Festkörper kann ein platten- oder scheibenförmiger Solid-PKD- oder Solid-PCBN-Rohling verwendet werden, aus dem die einteiligen Diamantkörper oder die Diamantsegmente ausgeschnitten werden und/oder dass als Festkörper ein Rohling wie Sandwich-PKD oder Sandwich-PCBN verwendet wird, wobei der Diamantkörper als Solid-PKD oder Solid-PKBN auf einem Grundkörper wie Hartmetallträger oder zwischen zwei Grundkörpern wie Hartmetallträgern angeordnet ist und wobei die Schneidelemente aus dem Rohling ausgeschnitten werden.

Vorzugsweise wird das zumindest eine Diamantsegment oder der Diamantkörper aus einem platten- oder scheibenförmigen Solid-PKD-, Solid-PCBN-Rohling ausgebildet, wobei die Rohlinge eine Schichtdicke D im Bereich von 0,3 mm ≤ D ≤ 5 mm, vorzugsweise 1 mm ≤ D ≤ 4 mm, besonders bevorzugt D = 2 mm aufweist. Der Diamantkörper kann auch Bestandteil eines platten- oder scheibenförmigen Sandwich-PKD-Rohlings oder Sandwich-PKBN-Rohlings sein, wobei der Diamantkörper als Solid-PKD oder Solid-PKBN auf einem Grundkörper wie Hartmetallträger oder zwischen zwei Grundkörpern wie Hartmetallträger angeordnet wird. Der zumindest eine Diamantkörper kann auch als CVD-Dünnschicht, CVD-Dickschicht oder Mono-Diamant auf den Werkzeuggrundkörper aufgetragen werden.

Wenn der Diamantkörper oder die Diamantsegmente aus einem Solid-PKD-oder Solid-PKBN-Rohling hergestellt werden, werden der Diamantkörper oder die Diamantsegmente durch vorzugsweise Vakuumlöten mit dem Werkzeuggrundkörper verbunden. Bei Ausführung als Sandwich-PKD- oder Sandwich-PCBN-Rohling kann die metallische Unterseite der Sandwich-Struktur vorzugsweise hartgelötet oder lasergeschweißt werden.

Die Diamantsegmente oder der Diamantkörper werden vorzugsweise mittels eines Draht-Erodierverfahrens oder Laserverfahrens aus einem platten- oder scheibenförmigen Solid-PKD-, Solid-PCBN-, Sandwich-PKD- oder Sandwich-PCBN-Rohling geschnitten.

Auch die Materialabtragung zur Herstellung der spiralisierten Schneidkante und/oder Spanfläche erfolgt mittels eines Erodierverfahrens, wobei die mit dem Werkzeuggrundkörper verbundenen Diamantsegmente oder der Diamantkörper in einer spiralisierten Bewegung an einer vorzugsweise in einem Winkel α entsprechend der Spiralisierung zur Werkzeuglängsachse angestellten rotierenden scheibenförmigen Kohle-Elektrode vorbeigeführt werden bzw. wird.

Alternativ kann die Materialabtragung mittels Laserverfahren erfolgen.

Bei der Materialabtragung kann sich die Breite einer Rundfase, d. h., die Umfangserstreckung des Diamantkörpers bzw. der Umfangssegmente in Längsrichtung der spiralisierten Schneidkante von beispielsweise ca. 2 mm auf ca. 0,8 mm. Die Breite B der Rundfase kann konstant sein oder in Längsrichtung zunehmen oder abnehmen.

Der Spiralisierungswinkel α kann bei Ausführung mit einem einzigen, kreissegmentförmigen Diamantkörper im Bereich 1° ≤ α ≤ 30° und bei Ausführung mit einzelnen, in Längsrichtung nacheinander angeordneten Diamantsegmenten in einem Bereich von 5° ≤ α ≤ 50° liegen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine erste Seitenansicht einer ersten Ausführungsform des Rotationsschneidwerkzeugs in 0°-Stellung,
- Fig. 2: eine Draufsicht des Rotationsschneidwerkzeugs gemäß Fig. 1,
- Fig. 3: eine zweite Seitenansicht des Rotationsschneidwerkzeugs in 90°-Stellung,
- Fig. 4: eine perspektivische Explosionsdarstellung des Rotationsschneidwerkzeugs,
- Fig. 5a: eine perspektivische Detailansicht auf ein Diamantsegment,
- Fig. 5b: eine perspektivische Ansicht eines PKD-Rohlings mit ausgeschnittenem Schneidelement,
- Fig. 6: eine erste Seitenansicht einer zweiten Ausführungsform eines Rotationsschneidwerkzeugs in Form einer Reibahle mit schraubenförmig entlang seiner Länge sich erstreckenden Schneidkanten in 90°-Stellung,
- Fig. 7: eine Draufsicht auf das Rotationsschneidwerkzeug gemäß Fig. 6,
- Fig. 8: eine Schnittdarstellung des Rotationsschneidwerkzeugs gemäß Fig. 6 entlang des Schnittes D-D und
- Fig. 9: eine zweite Seitenansicht des Rotationsschneidwerkzeugs gemäß Fig. 5 in 0°-Stellung,
- Fig. 10: eine perspektivische Darstellung einer dritten Ausführungsform eines Rotationsschneidwerkzeugs,
- Fig. 11: eine erste Seitenansicht des Rotationsschneidwerkzeuges gemäß Fig. 10 in 0°-Stellung,

- Fig. 12: eine zweite Seitenansicht des Rotationsschneidwerkzeuges gemäß Fig. 10 in 90°-Stellung,
- Fig. 13: eine Draufsicht des Rotationsschneidwerkzeuges gemäß Fig. 10,
- Fig. 14: eine Schnittdarstellung des Rotationsschneidwerkzeugs gemäß Fig. 12 entlang des Schnittes A-A,
- Fig. 15: eine perspektivische Darstellung einer vierten Ausführungsform eines Rotationsschneidwerkzeugs,
- Fig. 16: eine erste Seitenansicht des Rotationsschneidwerkzeugs gemäß Fig. 15 in 0°-Stellung,
- Fig. 17: eine zweite Seitenansicht des Rotationsschneidwerkzeugs gemäß Fig. 15 in 90°-Stellung,
- Fig. 18: eine Draufsicht auf das Rotationsschneidwerkzeug gemäß Fig. 15 und
- Fig. 19: eine Schnittdarstellung des Rotationsschneidwerkzeugs gemäß Fig. 17 entlang des Schnittes A-A.

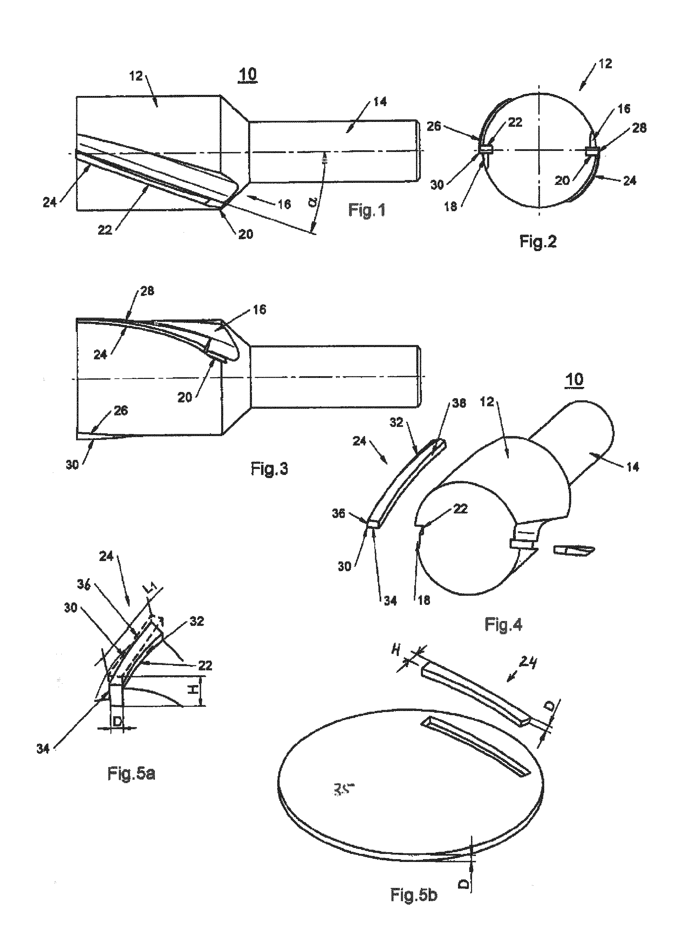

Fig. 1 zeigt eine Seitenansicht einer ersten Ausführungsform eines Rotationsschneidwerkzeugs 10 in Form einer Reibahle mit einem metallischen Werkzeugbasiskörper 12, von dem ein Schaft 14 ausgeht. Der Werkzeugbasiskörper 12 ist einstückig mit dem Schaft 14 verbunden.

Der Werkzeugbasiskörper 12 weist ein Paar schraubenförmiger Spannuten 16, 18 mit jeweils einer L- oder U-förmigen Aufnahme 20, 22 auf, entlang deren Verlauf jeweils ein einteiliges Schneidelement, nachstehend als Schneideinsatz 24, 26 bezeichnet, aus ultrahartem Schneidstoff wie polykristallinem Diamant (PKD) oder polykristallinem kubischem Bornitrid (PKBN) angeordnet ist, in dem eine schraubenförmig gekrümmte Schneidkante 28, 30 durch Materialabtragung eingebracht ist.

Der Diamantkörper 24 in Form des Kreisbogensegmentes ist in Fig. 4 in perspektivischer Ansicht dargestellt und weist gerade Seitenflächen 32, 34 auf, wobei die gerade Seitenfläche 32 eine Freifläche bildet und in der geraden U-förmigen Aufnahme 22 aufgenommen ist und wobei die spannutseitige gerade Seitenfläche 34 (Spanfläche) als freie Fläche sowie eine radiale Außenfläche 36 (Rundfase) ein Übermaß aufweisen, wie dies in Fig. 5a dargestellt ist. Ein bogenförmiger Innenrand 38 ist in der Aufnahme 22 aufgenommen, die mit einem Spiralisierungswinkel α bezogen zur Längsachse in den Werkzeugbasiskörper 12 eingeschliffen ist.

In der spannutseitigen geraden Seitenfläche 34 (Spanfläche) sowie der radialen Außenfläche 36 (Rundfase) des Diamantkörpers 24 ist die schraubenförmig gekrümmte Schneidkante 30 materialabtragend eingebracht, vorzugsweise mittels eines Erodier-oder Laserverfahrens eingeschliffen. Dabei weist die spannutseitige Seitenfläche 34 über die gesamte Länge einen konstanten Spanwinkel auf.

Gemäß der vorliegenden Erfindung ist der Schneideinsatz 24, 26 als ein eine Ebene aufspannender plattenförmiger einteiliger Diamantkörper bzw. Diamantsegment in Form eines Abschnitts eines Festkörpers 35 ausgebildet, der in Fig. 5b dargestellt ist. In dem dargestellten Ausführungsbeispiel ist der Diamantkörper 24, 26 als ein Kreisbogensegment ausgebildet, welches aus einem plattenförmigen Solid-PKD-Rohling als Festkörper 35 ausgeschnitten ist. Der Diamantkörper kann auch aus einem Solid-PKBN-Rohling hergestellt werden oder Bestandteil eines Sandwich-PKD- oder Sandwich-PCBN-Rohlings sein, wobei der Diamantkörper als Solid-PKD oder Solid-PKBN auf einem Grundkörper wie Hartmetallträger oder zwischenzwei Grundkörpern wie Hartmetallträgern angeordnet ist. Der den Diamantkörper aufweisende Schneideinsatz wird sodann aus dem Sandwich-PKD oder Sandwich-PKBN ausgeschnitten.

Ein Verfahren zur Herstellung des erfindungsgemäßen Rotationsschneidwerkzeugs zeichnet sich dadurch aus, dass der Schneideinsatz 24, 26 als ein eine Ebene aufspannender plattenförmiger Diamantkörper aus dem plattenförmigen Rohling 35 mit gegenüber einem Sollmaß radialem und umfangsseitigem Übermaß ausgeschnitten und mit dem Werkzeugkörper verbunden wird. Sodann wird durch Materialabtragung bei mit dem Werkzeugbasiskörper verbundenem Diamantkörper die schraubenförmige Schneidkante in die spannutseitige Seitenfläche 34 sowie radiale Außenfläche 36 des Diamantkörpers materialabtragend vorzugsweise mittels eines elektroerosiven Erodier-oder Laserverfahrens, eingebracht. Dabei wird der eine spiralisierte Bewegung ausführende Werkzeugbasiskörper mit Schneidkante entlang einer in einem Winkel zur Längsachse des Werkzeugbasiskörpers ausgerichteten rotierenden Elektrode wie Kohle-Elektrode bewegt.

Die Diamantkörper 24, 26 aus polykristallinem Material wie Solid-PKD, Solid-PKBN können aus der Platte bzw. Scheibe 35 mittels Drahterodierverfahrens ausgeschnitten werden. Dabei können die Diamantkörper eine Schichtdicke D im Bereich von 0,3 mm bis 4 mm, vorzugsweise D = 2 mm aufweisen. Ferner kann der Diamantkörper eine Länge L im Bereich von 5 mm ≤ L ≤ 50 mm aufweisen.

Der Winkel α kann bei einstückiger bzw. einteiliger Ausführungsform des Diamantkörpers Winkel im Bereich von 5° ≤ α ≤ 30°, vorzugsweise α = 20° aufweisen. Die Rohlinge der Diamantkörper können eine radiale Erstreckung bzw. Höhe H im Bereich von 2 mm ≤ H ≤ 4 mm aufweisen.

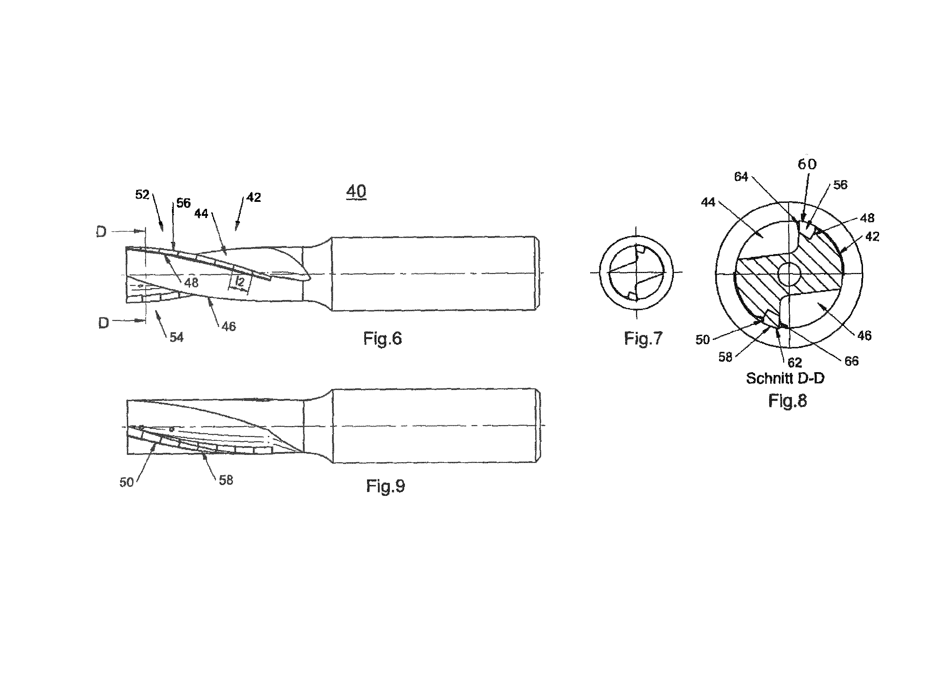

Die Fig. 6 bis 9 zeigen eine alternative Ausführungsform eines Rotationsschneidwerkzeugs 40 zum Fräsen oder Reiben. Das Werkzeug weist in einem Werkzeuggrundkörper 42 spiralisierte Spannuten 44, 46 auf, wobei entlang einer einen Anschlag bildenden Aufnahme 48, 50 der spiralisierten Spannut 44, 46 ein Schneideinsatz 52, 54 in Form von entlang der Aufnahme 48, 50 angeordneten einzelnen Segmenten 56, 58 aus polykristallinem Diamant wie Solid-PKD oder Solid-PKBN gebildet ist. Die Segmente 56, 58 sind plattenförmig ausgebildet und können aus Solid-PKD/-PKBN oder Sandwich-PKD/-PKBN hergestellt sein. Die einzelnen Segmente 56, 58, die eine Längserstreckung L2 im Bereich von 5mm ≤ L2 ≤ 15mm aufweisen, sind mit dem Werkzeugbasiskörper 42 verbunden wie vokuumverlötet oder hartverlötet.

Die bezogen auf ein Sollmaß radiales Übermaß aufweisenden Diamantsegmente 56, 58 werden anschließend mittels eines Erodierverfahrens oder Laserverfahrens bearbeitet, wobei eine spiralisierte Fläche 60, 62 (Rundfase) mit einer spiralisierten Schneidkante 64, 66 ausgebildet wird.

Bei dieser Ausführungsform wird sowohl die radiale Außenfläche 60 (Rundfase) als auch die Spanfläche 64, 66 mit vorzugsweise positivem Spanflächenwinkel, mittels des Erodierverfahrens oder Laserverfahrens bearbeitet, wobei sowohl die Rundfase in Form der radialen Außenfläche 60, 62 als auch eine Spanbrust bzw. Spanfläche in Form der Spanfläche 64, 66 bearbeitet wird. Dabei gehen die Flächen 60, 62 in Umfangsfläche des Werkzeugbasiskörpers 42 und die Spanflächen 64, 66 vorzugsweise mittels eines elektroerosiven Erodier- oder Laserverfahrens, vorzugsweise mittels eines elektroerosiven Erodier- oder Laserverfahrens, von der Spannut 44, 46 aufgespannte Fläche über.

Die spiralisierte Mantelschneide bzw. Schneidkante wird vorzugsweise mittels eines Erodierverfahrens materialabtragend eingebracht. Alternativ kann auch ein LaserVerfahren eingesetzt werden.

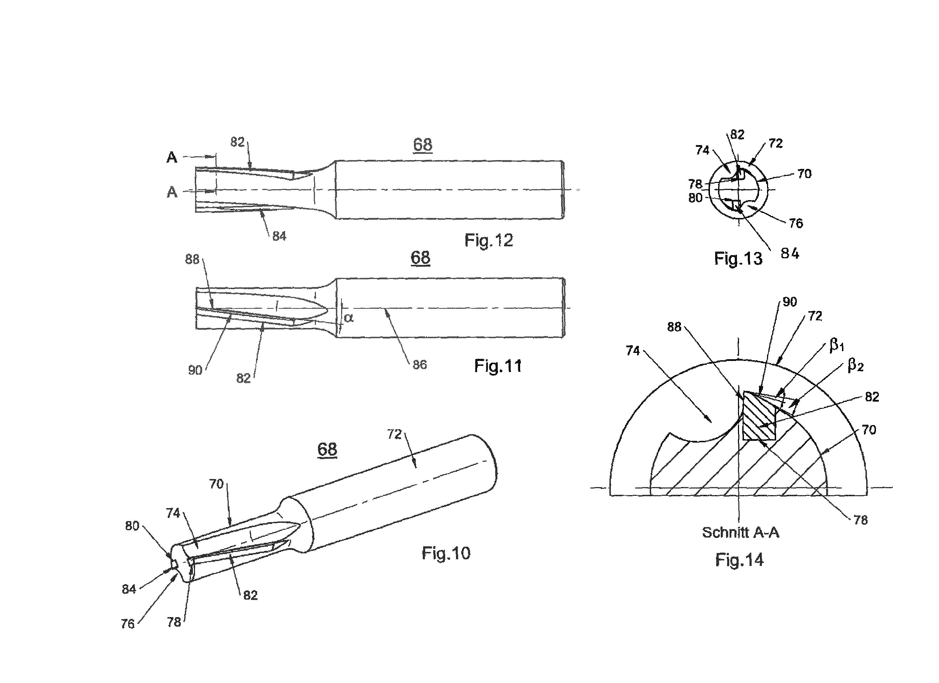

Fig. 10 zeigt eine perspektivische Ansicht einer dritten Ausführungsform eines Rotationsschneidwerkzeugs 68 mit einem metallischen Werkzeugbasiskörper 70 mit Schaft 72. Der Werkzeugbasiskörper 70 weist ein Paar schraubenförmiger Spannuten 74, 76 mit jeweils einer U-förmigen Aufnahme 78, 80 auf, entlang deren Verlauf jeweils ein Schneideinsatz 82, 84 aus ultrahartem Schneidstoff wie polykristallinem Diamant (PKD) oder polykristallinem kubischen Bohrnitrid (PKBN) angeordnet ist.

Fig. 11 bis 13 zeigen Ansichten des Rotationsschneidwerkzeugs 68, denen zu entnehmen ist, dass der Schneideinsatz 82 mit einer Längsachse 86 des Rotationsschneidwerkzeugs 68 einen Spiralisierungswinkel α einschließt. Der Spiralisierungswinkel α liegt im Bereich 1° ≤ α ≤ 30°, vorzugsweise α = 5°.

Fig. 14 zeigt eine Schnittdarstellung entlang des Schnittes A-A gemäß Fig. 12 des Werkzeugbasiskörpers 70 mit Spannut 74 und Schneideinsatz 82, der in der Aufnahme 78 befestigt wie verlötet ist. Fig. 14 zeigt den Schneideinsatz 82 im bearbeiteten Zustand mit einer spiralisierten Spanfläche 88 und einer Freifläche 90, die in einem ersten Abschnitt einen Freiwinkel β₁ und in einem zweiten Abschnitt einen Freiwinkel β₂ aufweist. Die Spanfläche 88 sowie die Freifläche 90 wurden mittels Funkenerodierverfahren bearbeitet. Sowohl die Spanfläche 88 als auch die Freifläche 90 weisen bezogen auf die Längsachse 86 des Rotationsschneidwerkzeugs 68 einen spiralisierten Verlauf auf.

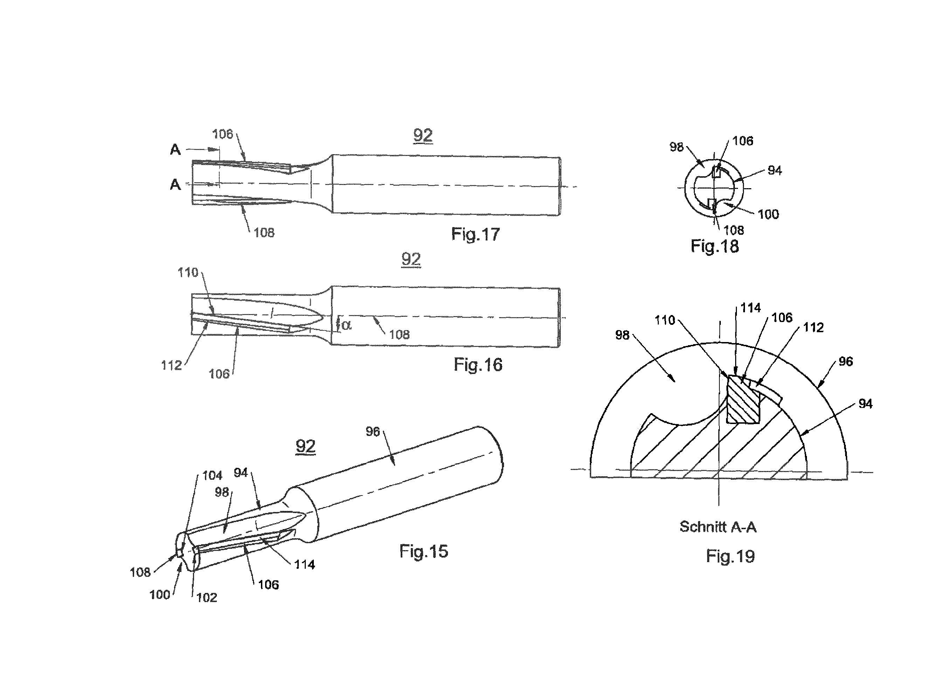

Fig. 15 zeigt in perspektivischer Ansicht eine vierte Ausführungsform eines Rotationsschneidwerkzeugs 92 mit einem metallischen Werkzeugbasiskörper 94 und einem Schaft 96. Der Werkzeugbasiskörper 94 weist ein Paar schraubenförmiger Spannuten 98, 100 auf, mit jeweils einer U-förmigen Aufnahme 102, 104, entlang deren Verlauf jeweils ein Schneideinsatz 106, 108 aus ultrahartem Schneidstoff wie polykristallinem Diamant (PKD) oder polykristallinem kubischen Bohrnitrid (PKBN) angeordnet wie verlötet ist.

Fig. 16 bis 18 zeigen Ansichten des Werkzeugbasiskörpers 92, wobei der Schneideinsatz 106 bezogen zu einer Längsachse 108 des Rotationsschneidwerkzeugs 92 einen Winkel α im Bereich von ca. 5° einschließt.

Gemäß Fig. 19, die eine Schnittdarstellung entlang der Schnittlinie A-A gemäß Fig. 17 zeigt, ist eine Spanfläche 110 des Schneideinsatzes 106 entlang einer spiralisierten Linie aus überstehendem Material des Schneideinsatzes 106 ausgebildet, insbesondere mittels eines materialabhebenden Verfahrens wie Elektroerodierverfahren ausgearbeitet. Gegenüberliegend der Spanfläche 110 ist eine Freifläche 112 als Hinterschliff eingearbeitet. In einer Außenfläche ist eine Rundfase 114 ausgebildet, die in der Seitenansicht gemäß Fig. 16 dargestellt ist. Bei dieser Ausführungsform verjüngt sich eine Breite B der Rundfase 114, 116 in Längsrichtung des Schneideinsatzes 106.

## Patentansprüche

1. Rotationsschneidwerkzeug (10; 40; 68; 92), insbesondere ein Fräswerkzeug, Bohrwerkzeug oder eine Reibahle, mit einem metallischen Werkzeuggrundkörper (12; 42; 70; 94) mit zumindest einer vorzugsweise schraubenförmigen Spannut (16, 18; 44,46; 74, 76; 98, 100), vorzugsweise einem Paar von Spannuten, wobei der zumindest einen Spannut ein Schneidelement (24, 26; 56, 58; 82, 84; 106, 108) aus einem ultraharten Schneidstoff, wie polykristalliner Diamant (PKD; engl. PCD) oder polykristallines kubisches Bornitrid (PKBN; engl. PCBN), zur Bildung einer schraubenförmig verlaufenden Schneidkante (28, 30; 64, 66; 88; 110) zugeordnet und mit dem Werkzeuggrundkörper (12; 42; 70; 94) verbunden wie verlötet ist,
**dadurch gekennzeichnet,**
**dass** das Schneidelement (24, 26; 56, 58; 82, 84; 106, 108) als ein einteiliger Diamantkörper (24, 26; 82, 84; 106, 108) in Form eines Abschnitts eines Festkörpers oder aus mehreren Diamantsegmenten (56, 58) jeweils in Form eines Abschnitts eines Festkörpers ausgebildet ist, dass das Schneidelement in einer entlang der Spannut (16, 18; 44,46; 74, 76; 98, 100) ausgebildeten Aufnahme (20, 22; 48, 50; 78, 80; 102, 104) aufgenommen ist und dass die schraubenförmig verlaufende Schneidkante in dem Diamantkörper oder den Diamantsegmenten materialabtragend ausgebildet ist.

2. Rotationsschneidwerkzeug nach Anspruch 1,
**dadurch gekennzeichnet,**
**dass** der Festkörper ein platten- oder scheibenförmiger Rohling aus Solid-PKD oder Solid-PKBN ist und/oder dass der Festkörper ein platten- oder scheibenförmiger Sandwich-PKD-Rohling oder Sandwich-PKBN-Rohling ist, wobei ein Solid-PKD oder ein Solid-PKBN zwischen zwei Grundkörpern wie Hartmetallträgern angeordnet ist und/oder dass der Festkörper ein platten- oder scheibenförmiger Rohling aus einem Grundkörper wie Hartmetallträger ist, auf dem das Solid-PKD oder Solid-PKBN angeordnet ist.

3. Rotationsschneidwerkzeug nach Anspruch 2,
**dadurch gekennzeichnet,**
**dass** das Solid-PKD oder das Solid-PKBN eine Schichtdicke D im Bereich von 0,3 mm ≤ D ≤ 5 mm, vorzugsweise 1 mm ≤ D ≤ 4 mm, besonders bevorzugt D = 2 mm aufweist.

4. Rotationsschneidwerkzeug nach Anspruch 1,
**dadurch gekennzeichnet,**
**dass** der einteilige Diamantkörper (24, 26; 82, 84; 106, 108) als ein vorzugsweise stabförmiges, im Querschnitt viereckiges Kreisringsegment ausgebildet ist und/oder dass das Kreisringsegment (24, 26; 82, 84; 106, 108) aus dem platten- oder scheibenförmigen Solid-PKD-, Solid-PKBN-, Sandwich-PKD- oder Sandwich-PKBN-Rohling ausgeschnitten ist und/oder dass das Kreisringsegment (24, 26; 82, 84; 106, 108) vorzugsweise eine Höhe H im Bereich von 0,1 mm ≤ H ≤ 10 mm, vorzugsweise 2 mm ≤ H ≤ 4 mm, eine Länge L1 im Bereich 1 mm ≤ L1 ≤ 120 mm von vorzugsweise 1 mm ≤ L1 ≤ 4 mm, 5 mm ≤ L1 ≤ 50 mm, vorzugsweise L1 = 30 mm aufweist.

5. Rotationsschneidwerkzeug nach Anspruch 1,
**dadurch gekennzeichnet,**
**dass** die Aufnahme (20, 22; 78, 80; 102, 104) im Querschnitt L- oder U-förmig ausgebildet ist und/oder dass die Aufnahme (20, 22; 78, 80; 102, 104) in einem Spiralisierungswinkel α bezogen zur Längsachse des Werkzeugs gerade oder schraubenförmig verläuft und dass die Aufnahme (20, 22; 78, 80; 102, 104) in den Werkzeuggrundkörper (12; 42; 70; 94) materialabtragend ausgebildet wie eingeschliffen ist.

6. Rotationsschneidwerkzeug nach Anspruch 5,
**dadurch gekennzeichnet,**
**dass** der kreisringsegmentförmige Diamantkörper (24, 26; 82, 84; 106, 108) einen in seiner Krümmung an einen Abschnitt der der L- oder U-förmigen Aufnahme (20, 22; 78, 80; 102, 104) angepassten bogenförmigen Innenrand und einen eine radiale Außenfläche bildenden bogenförmigen Außenrand aufweist.

7. Rotationsschneidwerkzeug nach Anspruch 5,
**dadurch gekennzeichnet,**
**dass** der Spiralisierungswinkel α bei dem einteiligen kreisringförmigen Diamantköper (24, 26; 82, 84; 106, 108) in einem Bereich 1° ≤ α ≤ 30° liegt und dass der Spiralisierungswinkel α bei Ausführung mit mehreren einzelnen, in Längsrichtung nacheinander angeordneten Diamantsegmenten (56, 58) in einem Bereich von 5° ≤ α ≤ 50° liegt.

8. Rotationsschneidwerkzeug nach zumindest einem der vorhergehenden Ansprüche,
**dadurch gekennzeichnet,**
**dass** die Aufnahme (48, 50) bei Ausführung mit mehreren einzelnen, in Längsrichtung nacheinander angeordneten Diamantsegmenten (56, 58) schraubenförmig ausgebildet ist, wobei die mehreren einzelnen Diamantsegmente (56, 58) entlang der schraubenförmig verlaufenden Aufnahme angeordnet und mit dem Werkzeugbasiskörper verbunden wie verlötet sind und/oder dass die schraubenförmige Schneidkante aus einer Vielzahl von Schneidkantenabschnitten der einzelnen Diamantsegmente gebildet ist.

9. Rotationsschneidwerkzeug nach zumindest einem der vorhergehenden Ansprüche,
**dadurch gekennzeichnet,**
**dass** sowohl eine Spanfläche als auch eine Freifläche des Schneidelementes (24, 26; 56, 58; 82, 84; 106, 108) schraubenförmig gekrümmt ausgebildet ist.

10. Rotationswerkzeug nach zumindest einem der vorhergehenden Ansprüche,
**dadurch gekennzeichnet,**
**dass** das Schneidelement (24, 26; 56, 58; 82, 84; 106, 108) eine Rundfase aufweist, wobei die Rundfase eine Breite B aufweist, die über die Längserstreckung des Schneidelementes konstant ist, kleiner oder größer wird.

11. Verfahren zur Herstellung eines Rotationsschneidwerkzeugs mit einem einen ultraharten Schneidstoff, wie polykristalliner Diamant (PKD; engl. PCD) oder polykristallines kubisches Bornitrid (PKBN; engl. PCBN), aufweisenden Schneidelement, umfassend die Verfahrensschritte:
a) Herstellen eines metallischen Werkzeuggrundkörpers mit zumindest einer Aufnahme für das Schneidelement entlang eines Spiralisierungswinkels α,
b) Herstellung des Schneidelementes,
c) Befestigen wie Verlöten des Schneidelementes in der zumindest einen Aufnahme des Werkzeuggrundkörpers,
**dadurch gekennzeichnet,**
**dass** als Schneidelement einteilige Diamantkörper in Form eines Abschnitts eines Festkörpers oder mehrere Diamantsegmente jeweils in Form eines Abschnitts eines Festkörpers verwendet und in der Aufnahme derart befestigt werden, dass das Schneidelement in Radial- und/der Umfangsrichtung ein Übermaß gegenüber einem Sollmaß aufweist und dass durch Materialabtragung in Radial- und/oder Umfangsrichtung des mit dem Werkzeuggrundkörper verbundenen Schneidelementes eine schraubenförmig verlaufende Schneidkante ausgebildet wird.

12. Verfahren nach Anspruch 11,
**dadurch gekennzeichnet,**
**dass** die Schneidkante in einer in Radial- und/oder Umfangsrichtung Übermaß aufweisenden Spanfläche und/oder Freifläche des Schneidelementes materialabtragend ausgebildet wird.

13. Verfahren nach Anspruch 11,
**dadurch gekennzeichnet,**
**dass** als Festkörper ein platten- oder scheibenförmiger Solid-PKD- oder Solid-PCBN-Rohling verwendet wird, aus dem die einteiligen Diamantkörper oder die Diamantsegmente ausgeschnitten werden und/oder dass als Festkörper ein Rohling wie Sandwich-PKD oder Sandwich-PCBN verwendet wird, wobei der Diamantkörper als Solid-PKD oder Solid-PKBN auf einem Grundkörper wie Hartmetallträger oder zwischen zwei Grundkörpern wie Hartmetallträgern angeordnet ist und wobei die Schneidelemente aus dem Rohling ausgeschnitten werden.

14. Verfahren nach Anspruch 13,
**dadurch gekennzeichnet,**
**dass** die Materialabtragung zur Herstellung der spiralisierten Schneidkante bei konstantem Spanwinkel erfolgt.

15. Verfahren nach Anspruch 13,
**dadurch gekennzeichnet,**
**dass** die aus Solid-PKD oder Solid-PKBN hergestellten Diamantkörper oder Diamantsegmente durch vorzugsweise Vakuumlöten mit dem Werkzeuggrundkörper verbunden werden und/oder dass die aus dem Sandwich-PKD-Rohling oder Sandwich-PKBN-Rohling hergestellten Schneidelemente mittels einer metallischen Unterseite der Sandwich-Struktur durch vorzugsweise Hartlöten oder Laserschweißen mit dem Werkzeuggrundkörper verbunden werden.

16. Verfahren nach Anspruch 11,
**dadurch gekennzeichnet,**
**dass** der Diamantkörper oder die Diamantsegmente mittels eines Drahterodierverfahrens oder Laserverfahrens aus einem platten- oder scheibenförmigen Solid-PKD-, Solid-PCBN-, Sandwich-PKD- oder Sandwich-PCBN-Rohling ausgeschnitten werden.

17. Verfahren nach Anspruch 11,
**dadurch gekennzeichnet,**
**dass** die Materialabtragung zur Herstellung der spiralisierten Schneidkante mittels eines Erodierverfahrens erfolgt, wobei der oder die mit dem Werkzeugkörper verbundene Diamantkörper bzw. verbundenen Diamantsegmente in einer spiralisierten Bewegung an einer vorzugsweise in einem Spiralisierungswinkel α entsprechend der Spiralisierung zur Werkzeuglängsachse angestellten rotierenden vorzugsweise scheibenförmigen Elektrode wie Kohle- oder Kupferelektrode vorbeigeführt wird bzw. werden.

18. Verfahren nach Anspruch 15,
**dadurch gekennzeichnet,**
**dass** die Aufnahme für den einteiligen kreisringförmigen Diamantköper (24, 26; 82, 84; 106, 108) mit einem Spiralisierungswinkel α in einem Bereich 1° ≤ α ≤ 30° ausgebildet wird und dass die Aufnahme für die mehreren einzelnen, in Längsrichtung nacheinander angeordneten Diamantsegmente (56, 58) mit einem Spiralisierungswinkel α in einem Bereich von 5° ≤ α ≤ 50° ausgebildet wird.
